# EUROPÄISCHE PATENTSCHRIFT

(11) **EP 1 975 418 B1**
(45) Veröffentlichungstag und Bekanntmachung des Hinweises auf die Patenterteilung: **16.09.2009**
(21) Anmeldenummer: 07400007.6
(22) Anmeldetag: 29.03.2007
(51) Int. Cl.: F15B 13/00

(54) **Ventilbatterie**
Valve bank
Batterie de soupape

(43) Veröffentlichungstag der Anmeldung: 01.10.2008
(73) Patentinhaber: FESTO AG & Co. KG, 73734 Esslingen (DE)
(72) Erfinder: Arbter, Jürgen Dipl.-Ing., 71332 Waiblingen (DE); Nölle, Gerhard Dipl.-Phys., 73207 Plochingen (DE); Kintzel, Thomas Dipl.-Ing., 73730 Esslingen (DE)
(74) Vertreter: Bregenzer, Michael

(56) Entgegenhaltungen:
- EP-A1- 1 586 780
- WO-A-94/04831
- US-A- 4 124 887

## Beschreibung

Die Erfindung betrifft eine Ventilbatterie mit mehreren in einer Reihenrichtung nebeneinander angeordneten Ventilmodulen zur fluidtechnischen Ansteuerung fluidtechnischer Geräte, und mit mindestens einem mit der Ventilbatterie verbundenen, durch die Ventilbatterie gesteuerten fluidtechnischen Gerät, das eine von der Ventilbatterie separate Baueinheit bildet (EP 1586780).

Bei dem fluidtechnischen Gerät handelt es sich beispielsweise um einen pneumatischen Arbeitszylinder, der durch die Ventilbatterie angesteuert wird. Die Konfiguration eines Automatisierungssystemes, beispielsweise der Ventilbatterie, ist jedoch umfangreich und schwierig. So müssen beispielsweise Betriebsparameter des fluidtechnischen Geräts bei einer Steuerung oder Regelung der Ventilbatterie oder einer dieser überlagerten Steuerungseinrichtung gespeichert werden. Bei den Betriebsdaten oder Identifikationsdaten handelt es sich z.B. um einen Verstellweg des pneumatischen Antriebs, dessen Kolbendurchmesser oder dergleichen.

Es ist daher die Aufgabe der vorliegenden Erfindung, eine einfach konfigurierbare und parametrierbare ventilbatterie bereitzustellen.

Zur Lösung der Aufgabe ist bei einer Ventilbatterie der eingangs genannten Art vorgesehen, dass sie eine dem fluidtechnischen Gerät zugeordnete Empfangseinrichtung aufweist, die zum Empfangen von das mindestens eine fluidtechnische Gerät kennzeichnenden Geräte-Identifikationsdaten ausgestaltet ist, die eine dem fluidtechnischen Gerät zugeordnete Identdaten-Sendeeinrichtung sendet, und dass die Empfangseinrichtung zum Weiterleiten der Geräte-Identifikationsdaten mit einer Steuerungseinrichtung zur Steuerung des fluidtechnischen Geräts verbunden ist oder verbindbar ist.

Ein Grundgedanke der Erfindung ist, dass die Ventilbatterie mit der Empfangseinrichtung - es können auch mehrere Empfangseinrichtungen dieser Art vorgesehen sein - Geräte-Identifikationsdaten empfängt, so dass diese Daten nicht separat beispielsweise an einer Parametrierschnittstelle der Ventilbatterie eingegeben werden müssen. Bei dem fluidtechnischen Gerät handelt es sich beispielsweise um ein pneumatisches Ventil, einen pneumatischen Arbeitszylinder, einen Hybrid-Antrieb (elektrisch und fluidtechnisch, insbesondere pneumatisch), eine Vakuumeinrichtung bzw. eine Vakuum-Handhandungseinrichtung, z.B. einen Sauger, einen hydraulischen Antrieb oder dergleichen. Die geräte-spezifischen Daten, beispielsweise der jeweilige Arbeitshub, zulässige Drücke oder dergleichen, werden von der Ventilbatterie an der Empfangseinrichtung empfangen und stehen dann zu einer weiteren Nutzung bereit.

Bei den Geräte-Identifikationsdaten handelt es sich beispielsweise um einen Typ des Gerätes, um eine Seriennummer des Gerätes, um physikalische Größen, z.B. Länge, Wirkfläche eines Aktorglieds oder Kolbens, Druckwerte, insbesondere Maximaldrücke und Nenn-Betriebsdrücke, Kraftabgabewerte, Kraftabgabewerte im Verhältnis zu eingestellten Drücken, ein Arbeitshub oder dergleichen. Auch kinematische Daten des fluidtechnischen Gerätes, z.B. Geschwindigkeitswerte, z.B. eine Maximalgeschwindigkeit oder eine Nenn-Betriebsgeschwindigkeit, Bremsweg oder dergleichen können Geräte-Identifikationsdaten darstellen.

Die Steuerungseinrichtung kann beispielsweise einen Bestandteil der Ventilbatterie bilden oder eine überlagerte Steuerungseinrichtung sein. Zweckmäßigerweise enthält die jeweilige Steuerungseinrichtung einen Regler zur Regelung des fluidtechnischen Geräts oder bildet einen solchen Regler.

Ein vorteilhaftes modulares Rezept sieht vor, dass die Steuerungseinrichtung ein an die Ventilmodule anreihbares Steuermodul oder Reglermodul bildet.

Die Empfangseinrichtung kann an verschiedenen Stellen der Ventilbatterie vorgesehen sein. Beispielsweise kann sie einen Bestandteil einer Steuerungseinrichtung sein, an einem Eingabe- oder Ausgabemodul zur analogen oder vorteilhaft digitalen Ein- und Ausgabe von Werten vorgesehen sein. Auch an einer Ventilbatterie-Kommunikationseinrichtung, beispielsweise an einem Feldbus-Anschlussmodul, kann die Empfangseinrichtung angeordnet sein. Die Empfangseinrichtung kann auch einen Bestandteil einer Regler-Kommunikationsschnittstelle zur Regelung des mindestens einen fluidtechnischen Gerätes bilden. Die Regler-Kommunikationsschnittstelle ist vorzugsweise an einem Reglermodul der Ventilbatterie vorgesehen.

Die Empfangseinrichtung ist zweckmäßigerweise mit einer Ventilbatterie-Kommunikationseinrichtung, beispielsweise einem Kommunikationsmodul, zu einer externen Kommunikation der Ventilbatterie verbunden. Über die Ventilbatterie-Kommunikationseinrichtung können die an der erfindungsgemäßen Empfangseinrichtung empfangenen Geräte-Identifikationsdaten an weitere Komponenten eines Automatisierungssystems, beispielsweise an ein Parametrierwerkzeug, an eine überlagerte Steuerung, an ein Diagnosegerät oder dergleichen übermittelt werden.

Zur internen Kommunikation innerhalb der Ventilbatterie ist zweckmäßigerweise ein interner Kommunikationsbus vorgesehen. An diesen Kommunikationsbus sind die Module der Ventilbatterie angeschlossen, insbesondere auch solche Module, die eine Empfangseinrichtung für Geräte-Identifikationsdaten aufweisen.

Die Empfangseinrichtung für die Geräte-Identifikationsdaten kann eine drahtgebundene oder eine drahtlose Schnittstelle umfassen. Der Installationsaufwand ist bei einer drahtlosen Schnittstelle vereinfacht. Die drahtlose Schnittstelle ist beispielsweise eine Funk-Schnittstelle oder eine optische Schnittstelle.

Vorteilhaft ist es, wenn die Empfangseinrichtung eine Bus-Schnittstelle umfasst. Dann lässt sich eine zweckmäßige Konfiguration ohne weiteres realisieren, bei der die Empfangseinrichtung für eine verkettete Anschlussanordnung ausgestaltet ist. Bei dieser Anschlussanordnung ist eine erste Identdaten-Sendeeinrichtung eines ersten fluidtechnischen Geräts und mindestens eine zweite Identdaten-Sendeeinrichtung eines zweiten fluidtechnischen Geräts seriell mit der Empfangseinrichtung verbunden. Die Identdaten-Sendeeinrichtungen sind beispielsweise seriell oder parallel mit dem Bus verbunden. Auch eine kaskadierte Anordnung, bei der eine Identdaten-Sendeeinrichtung die Geräte-Identifikationsdaten der anderen Identdaten-Sendeeinrichtung durchschleift oder empfängt und weiterleitet, ist vorteilhaft.

Die Identdaten-Sendeeinrichtungen können vielgestaltig sein. Beispielsweise bilden sie einen Bestandteil des fluidtechnischen Geräts. So kann eine Identdaten-Sendeeinrichtung beispielsweise einen Bestandteil eines pneumatischen Zylinders, eines pneumatischen Ventils oder dergleichen bilden. Aber auch eine modulare, separate Bauweise ist vorteilhaft, bei der die Identdaten-Sendeeinrichtung eine vom jeweiligen fluidtechnischen Gerät separate Baueinheit bildet. Beispielsweise handelt es sich dabei um ein Identmodul, das eine Leitungsverbidnung zwischen dem fluidtechnischen Gerät und der Empfangseinrichtung auf Seiten der Ventilbatterie geschaltet ist. Aber auch eine Sensorvorrichtung, die dem fluidtechnischen Gerät zugeordnet ist, kann die Geräte-Identifikationsdaten an die Ventilbatterie übermitteln. Zwar kann die Sensorvorrichtung auch einen Bestandteil des fluidtechnischen Geräts bilden. Vorteilhaft ist aber ein modulares Konzept, bei der die Sensorvorrichtung eine von dem fluidtechnischen Gerät separate Baueinheit bildet. Die Sensorvorrichtung sendet über ihre Sensor-Kommunikationseinrichtung die Geräte-Identifikationsdaten an die Ventilbatterie. Die Geräte-Identifikationsdaten können dabei auf der Sensorvorrichtung und/oder im fluidtechnischen Gerät gespeichert sein. Die Sensorvorrichtung liest dann die beim fluidtechnischen Gerät gespeicherten Geräte-Identifikationsdaten aus und übermittelt diese über ihre Sensor-Kommunikationseinrichtung an die Ventilbatterie.

Das fluidtechnische Gerät kann eine von der Ventilbatterie entfernte Ventileinrichtung sein, beispielsweise ein Servoventil, das einen fluidtechnischen Aktor ansteuert. Der Aktor ist beispielsweise ein pneumatischer Positionierantrieb. Bei dieser Anordnung ist es vorteilhaft, wenn der fluidtechnische Aktor oder eine dem Aktor zugeordnete Sensorvorrichtung, die beispielsweise ein am Aktor angeordnetes Sensormodul umfasst, Aktor-Identifikationsdaten über die von der Ventilbatterie abgesetzte Ventileinrichtung an die Ventilbatterie seriell übermittelt. Auch bei dieser Konfiguration ist es möglich, dass zwischen die Ventileinrichtung und den fluidtechnischen Aktor ein Identmodul geschaltet ist, das die Aktor-Identifikationsdaten an die Ventileinrichtung und über diese weiter an die Ventilbatterie sendet.

Zwar ist es möglich, dass die Empfangseinrichtung über separate Datenleitungen, beispielsweise Busleitungen, über die die Identdaten-Sendeeinrichtung mit der Ventilbatterie verbunden ist. Eine vereinfachte Installation ergibt sich dann, wenn die Empfangseinrichtung mit der Identdaten-Sendeeinrichtung des fluidtechnischen Gerätes über eine Fluid-Verbindungsleitung verbunden ist, die neben einem Fluidkanal zusätzlich mindestens eine Datenleitung zur Übertragung von Geräte-Identifikationsdaten enthält. Die Datenleitung kann beispielsweise eine optische oder elektrische Leitung sein. Die Datenleitung ist beispielsweise in einem Mantel für den Fluidkanal angeordnet.

Nachfolgend werden Ausführungsbeispiele der Erfindung anhand der Zeichnung erläutert. Es zeigen:

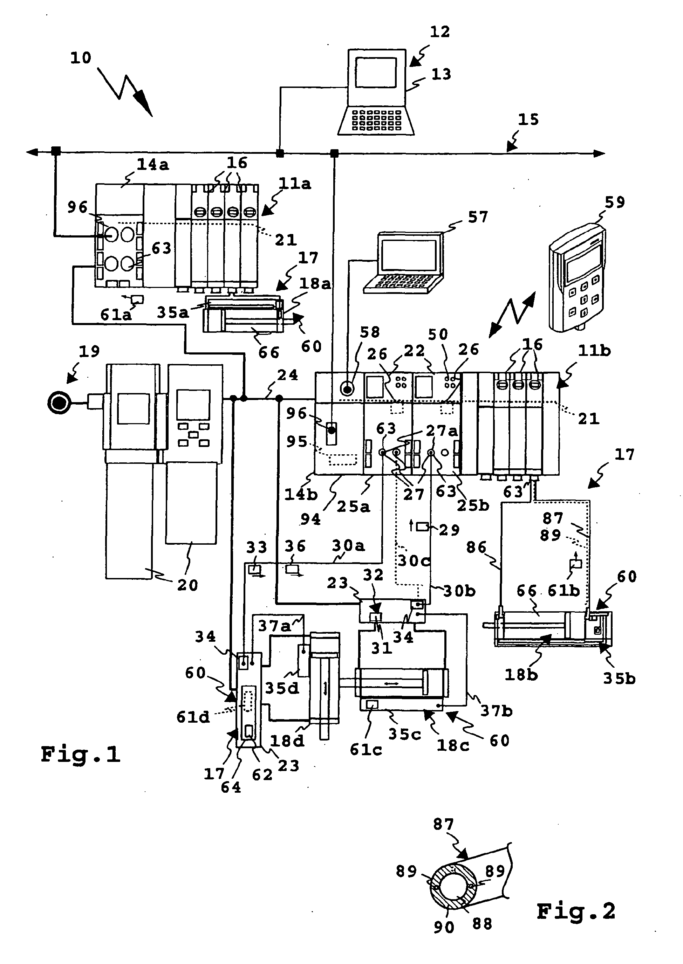

- Figur 1: schematisch ein Automatisierungssystem mit zwei Ventilbatterien und einer Leitzentrale,
- Figur 2: eine Fluidleitung mit integrierten elektrischen Leitern zur Anbindung eines Aktors an eine Ventilbatterie gemäß Figur 1,

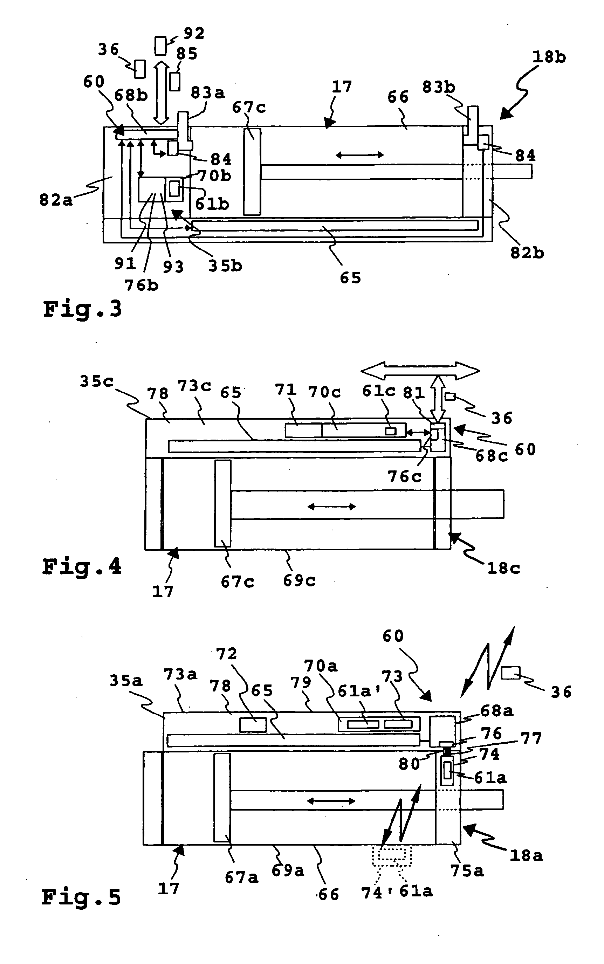

- Figur 3: eine schematische Seitenansicht eines fluidtechnischen Aktors mit einer Sensoranordnung, die den Aktor kennzeichnende Geräte-Identifikationsdaten über eine Sensor-Kommunikationseinrichtung sendet,
- Figur 4: einen Aktor mit einer an den Aktor angebauten, eine separate Baueinheit bildenden Sensorvorrichtung, die ebenfalls Geräte-Identifikationsdaten des Aktors über eine Sensor-Kommunikationsschnittstelle sendet und
- Figur 5: einen Aktor mit einem Speicher, in dem den Aktor kennzeichnende Geräte-Identifikationsdaten gespeichert sind, die von einer an den Aktor angebauten, eine separate Baueinheit bildenden Sensorvorrichtung über deren Sensor-Kommunikationsschnittstelle versendet werden.

Die Ausführungsbeispiele der Erfindung zeigen teilweise ähnliche oder gleichwirkende Komponenten, die mit denselben Bezugszeichen versehen und nur je einmal beschrieben sind.

Bei einem Automatisierungssystem 10 werden Ventilbatterien 11a, 11b von einer übergeordneten, zentralen Steuerungseinrichtung 12, beispielsweise einem Leitrechner 13, gesteuert. Die Ventilbatterien 11a, 11b sind mit Ventilbatterie-Kommunikationseinrichtungen 14a, 14b zu einer externen Kommunikation an einen Systembus 15, beispielsweise einen Feldbus, über Extern-Schnittstellen 96 angeschlossen, z.B. Bus-Schnittstellen. Die Steuerungseinrichtung 12 steuert die Ventilbatterien 11a, 11b über den Systembus 15, der leitungsgebunden oder drahtlos sein kann.

Die Ventilbatterien 11a, 11b enthalten Ventilmodule 16, die an die Kommunikationseinrichtungen 14a, 14b angereiht sind. Die Ventilmodule 16 dienen zur fluidtechnischen Ansteuerung von fluidtechnischen Geräten 17, beispielsweise pneumatischen Aktoren 18a, 18b. Die Aktoren 18a, 18b sind pneumatische Arbeitszylinder 66, wobei beispielhaft solche mit Kolbenstangen dargestellt sind, aber auch kolbenstangenlose Varianten oder Bauarten mit einem zusätzlichen elektrischen Antriebsteil möglich sind. Die Reglermodule 25a, 25b sind auch zur Regelung elektrischer oder kombinierter fluidtechnischerelektrischer Antriebe ausgestaltet. So könnte beispielsweise an Stelle des pneumatischen Aktors 18d ein elektrischer Antrieb vorgesehen sein.

Die Ventilbatterien 11a, 11b werden mit Druckluft betrieben, beispielsweise aus einer Druckluftquelle 19. Die Druckluftquelle 19 speist beispielsweise Wartungsgeräte 20, z.B. Filter und Öler, die Druckluft für die Ventilbatterien 11a, 11b aufbereiten. Die Wartungsgeräte 20 sind vorliegend von den Ventilbatterien 11a, 11b separate Einrichtungen, können aber beispielsweise auch Bestandteile der Ventilbatterie 11b bilden.

Die Ventilmodule 16 erhalten von der zentralen Steuerungseinrichtung 12 Steuerbefehle zur pneumatischen Ansteuerung der Aktoren 18a, 18b über den Systembus 15. Die Kommunikationseinrichtungen 14a, 14b übertragen die so erhaltenen Steuerbefehle über interne Kommunikationsbusse 21 an die Ventilmodule 16. Die Kommunikationsbusse 21 dienen zur internen Kommunikation der Ventilbatterien 11a, 11b.

Während die Ventilbatterie 11a ausschließlich extern über den Systembus 15 gesteuert wird, hat die Ventilbatterie 11b eine lokale Steuerungskompetenz in Gestalt von Steuerungseinrichtungen 22. Die Steuerungseinrichtungen 22 sind als Steuermodule ausgestaltet, die zwischen die Ventilmodule 16 sowie die als Kommunikationsmodul ausgestaltete Kommunikationseinrichtung 14b geschaltet sind.

Optional kann die Ventilbatterie 11b eine lokale Steuerungseinrichtung 94 zur ihrer Steuerung, z.B. der Ventilmodule 16, enthalten, z.B. ein separates Steuerungsmodul. Auch die Kommunikationseinrichtung 14b kann als eine lokale Steuerungseinrichtung 94 für die Ventilbatterie 11b ausgestaltet sein. Zu diesem Zweck enthält die Kommunikationseinrichtung 14b beispielsweise einen Prozessor 95, der über den Kommunikationsbus 21 Steuerbefehle beispielsweise an die ventilmodule 16 sendet.

Die Steuerungseinrichtungen 22 steuern Ventileinrichtungen 23 an, die wiederum Aktoren 18c, 18d ansteuern. Die Aktoren 18c, 18d bilden z.B. Servoantriebe. Zwar könnten die Aktoren 18c, 18d voneinander unabhängige Antriebe sein. Die Aktoren 18c, 18d sind jedoch miteinander mechanisch gekoppelt. In der Zeichnung ist das schematisch dadurch veranschaulicht, dass der Aktor 18d am Kraftabgriff des Aktors 18c, beispielsweise seiner Kolbenstange, angeordnet ist. Eine mechanische Kopplung kann aber auch indirekt realisiert sein, beispielsweise wenn die Aktoren 18c und 18d Antriebe eines Portals oder eines in X- und Y-Richtung verfahrbaren Schlittens bilden.

Die Ventileinrichtungen 23 sind von der Ventilbatterie 11b separate Ventile, die an ein von der Druckluftquelle 19 mit Druckluft gespeistes Druckluftnetz 24 angeschlossen sind. Die Ventileinrichtungen 23 steuern die Druckluftzufuhr zu den Aktoren 18c, 18d, die beispielsweise pneumatische Arbeitszylinder sind. Die Ventileinrichtungen 23 und die Aktoren 18c, 18d sind ebenfalls fluidtechnische Geräte 17.

Die Steuerungseinrichtungen 22 regeln die Aktoren 18c, 18d durch eine Ansteuerung der Ventileinrichtungen 23 im Sinne einer Regelung. Die Steuerungseinrichtungen 22 sind beispielsweise Reglermodule 25a, 25b. Die Reglermodule 25a, 25b fügen sich in das modulare Konzept der Ventilbatterie 11b ein. Sie sind an die Ventilmodule 16 sowie an die Kommunikationseinrichtung 14b anreihbar. Die Reglermodule 25a, 25b sind mit Internbus-Schnittstellen 26 an den internen Kommunikationsbus 21 der Ventilbatterie 11b angekoppelt. Die Reglermodule 25a, 25b können über den Kommunikationsbus 21 Nachrichten empfangen, beispielsweise Steuerbefehle der Steuerungseinrichtung 12 sowie Nachrichten versenden, beispielsweise Meldungen, die die Kommunikationseinrichtung 14b an die Steuerungseinrichtung weiterleitet.

Für ihre Regelungsaufgaben haben die Reglermodule 25a, 25b separate Regler-Kommunikationsschnittstellen 27 zum Ausgeben von Stellwerten 28 und zum Empfangen von Istwerten 29. Die Kommünikationsschnittstellen 27 sind Echtzeitschnittstellen. Die Kommunikationsschnittstellen 27 enthalten digitale Bus-Schnittstellen 27a. Die Ventileinrichtungen 23 sind über Busleitungen 30a, 30b an die Kommunikationsschnittstellen 27 angeschlossen, so dass jeder zu regelnden fluidtechnischen Baugruppe bestehend aus je einer Ventileinrichtung 23 und einem der Aktoren 18c, 18d eine separate Regler-Busleitung 30a oder 30b zur Verfügung steht. Dadurch ist eine schnelle Kommunikation zwischen den zu regelnden Baugruppen und dem zugeordneten Reglermodul 25a, 25b möglich. Zwischen jedem Reglermodul 25a, 25b und seiner zu regelnden Anordnung 23, 18c oder 23, 18d existiert eine separate physikalische Verbindung. Auf diesen Verbindungen werden auch die Istwerte 29 übertragen.

Alternativ könnte das Reglermodul 25a ein Regler für zwei Aktoren sein und über die Busleitung 30a und eine optionale Busleitung 30c, die an Stelle der Busleitung 30b zum Reglermodul 25a führt, beide Anordnungen 23, 18c oder 23, 18d regeln.

Die Istwerte 29 enthalten z.B. Druck-Sensorwerte 33, die von Drucksensoren 31 einer Sensoranordnung 32 der Ventileinrichtungen 23 generiert werden. Die Drucksensoren 31 sind beispielsweise an Anschlüssen für Druckluftleitungen angeordnet, mit denen die Aktoren 18c, 18d an die Ventileinrichtungen 23 angeschlossen sind. Insofern bilden die Ventileinrichtungen 23 Sensorvorrichtungen. Die Ventileinrichtungen 23 übertragen die Druck-Sensorwerte 33 mittels eines Busankopplers 34, der insoweit eine Sensor-Kommunikationsschnittstelle bildet, auf der jeweiligen Busleitung 30a oder 30b an das Reglermodul 25a oder 25b.

An den Aktoren 18c, 18d angeordnete Sensorvorrichtungen 35c, 35d erzeugen weitere Sensorwerte als Istwerte 29, z.B. Druckwerte, Kraftwerte, Temperaturwerte und/oder Positionswerte 36.

Die Sensorvorrichtungen 35c, 35d sind seriell an die Ventileinrichtungen 23 über Busleitungen 37a, 37b angekoppelt. Hierfür könnten die Ventileinrichtungen 23 separate Busankoppler aufweisen. Es ist aber auch möglich, dass die Anschlusskontakte für die Busleitungen 37a, 37b bei den Ventileinrichtungen 23 zu den entsprechenden Anschlusskontakten der Busankoppler 34 durchgeschleift sind. Jedenfalls ist der Anschluss der Sensorvorrichtungen 35c, 35d sowie der Ventileinrichtungen 23 dadurch vereinfacht, dass diese Einrichtungen seriell miteinander gekoppelt sind, dass nur eine Verbindungsleitung zu den Regler-Kommunikationsschnittstellen 27 führt.

Die Einstellung von Parametern, insbesondere Regelungsparametern und/oder eine Auswahl einer Regelungsart (Lageregelung, Druckregelung, Lageregelung mit unterlagerter Druckregelung), und/oder eine Diagnose der Module der Ventilbatterie 11b, z.B. der Reglermodule 25a, 25b, können an zentraler Stelle mit einem Bediengerät 57, beispielsweise einem Notebook, realisiert werden. Das Bediengerät 57 ist an eine Bediengeräte-Schnittstelle 58 der Kommunikationseinrichtung 14b anschließbar und auf diesem Wege mit dem internen Kommunikationsbus 21 verbindbar. Dann können Parameter von dem Bediengerät 57 in die Ventilbatterie 11b, beispielsweise die Reglermodule 25a, 25b oder sonstige Module, geladen werden. Auch eine Diagnose ist mit dem Bediengerät 57 möglich. So senden beispielsweise die Reglermodule 25a, 25b Störungsmeldungen, Meldungen über eine Anzahl von bereits durchlaufenen Arbeitszyklen oder sonstige Diagnosedaten an das Bediengerät 57.

Es versteht sich, dass auch eine drahtlose Bedienung oder Diagnose möglich ist, beispielsweise mit einem Bediengerät 59, das drahtlos mit der Kommunikationseinrichtung 14b kommuniziert.

Die Inbetriebnahme des Automatisierungssystems 10 sowie die Diagnose und/oder Parametrierung der Reglermodule 25a, 25b, ist durch ein Auto-Identifikationskonzept vereinfacht. Die fluidtechnischen Geräte 17 oder diesen zugeordnete Einrichtungen, beispielsweise den Aktoren 18a-18c zugeordnete Sensorvorrichtungen 35a, 35b und 35c, enthalten oder bilden Identdaten-Sendeeinrichtungen 60, die Geräte-Identifikationsdaten 61a, 61b, 61c, 61d und 62 an Empfangseinrichtungen 63 für die Identifikationsdaten 61a - 61c, 62 der Ventilbatterien 11a, 11b. Die Identifikationsdaten 61a - 61d kennzeichnen die pneumatischen Aktoren 18a, 18b, 18c und 18d. Die Identifikationsdaten 62 kennzeichnen die Ventileinrichtungen 23.

Die Geräte-Identifikationsdaten 62 der Ventileinrichtungen 23 sind in einem optional vorhandenen Speicher 64 gespeichert. Bei der dem Aktor 18d zugeordneten Ventileinrichtung 23 können zusätzlich auch die Geräte-Identifikationsdaten 61d gespeichert sein, die den Aktor 18d kennzeichnen. Der Aktor 18d hat z.B. keinen eigenen Speicher zur Speicherung seiner Identifikationsdaten und ferner keine Schnittstelle, um diese an die Ventilbatterie 11b zu übermitteln.

Die den Aktor 18c fluidtechnisch ansteuernde Ventileinrichtung 23 übermittelt dessen Geräte-Identifikationsdaten 61c, die sie über die Leitung 37b empfängt, auf der Busleitung 30b weiter an die Regler-Kommunikationsschnittstelle 27.

Die Regler-Kommunikationsschnittstellen 27 bilden oder enthalten Empfangseinrichtungen 63 für die Geräte-Identifikationsdaten 62, 61c sowie Geräte-Identifikationsdaten 61d des Aktors 18d. Anhand dieser Geräte-Identifikationsdaten die beispielsweise Arbeitshübe der Aktoren 18c, 18d enthalten, regeln die Reglermodule 25a, 25b die Aktoren 18c, 18d. Dabei ist es möglich, dass die Reglermodule 25a, 25b unmittelbar die Geräte-Identifikationsdaten 61c, 61d und 62 zur Generierung von Regelungsparametern auswerten. Somit können beispielsweise Maximaldrücke dazu dienen, dass eine Druckregelung einen Maximaldruck der Druckluft begrenzt. Ferner ist es möglich, dass die Reglermodule 25a, 25b auf der vorhandenen Kommunikationsinfrastruktur, nämlich dem internen Kommunikationsbus 21 und der Kommunikationseinrichtung 14b, die jeweiligen Geräte-Identifikationsdaten 61b, 61d, 62 an das Bediengerät 57 übermitteln, das daraus Reglerparameter generiert und an die Reglermodule 25a, 25b auf dem genannten Kommunikationsweg sendet.

Die Sensorvorrichtung 35a überträgt die Geräte-Identifikationsdaten 61a drahtlos an eine in der Ventilbatterie-Kommunikationseinrichtung 14a enthaltene Empfangseinrichtung 63.

Der Aktor 18b ist mit einer konventionellen Druckluftleitung 86 und mit einer Fluid-Verbindungsleitung 87, die einen Fluidkanal 88 und Datenleitungen 89 aufweist, an die Ventilbatterie 11b angeschlossen. Die Datenleitungen 89 sind beispielsweise in einem den Fluidkanal 88 begrenzenden Mantel 90 angeordnet. Beim Stecken der Fluid-Verbindungsleitung 87 werden in der Zeichnung nicht dargestellte Kontakte der Ventilbatterie 11b und der Sensorvorrichtung 35b mit den Datenleitungen 89 verbunden, so dass gleichzeitig eine Fluidverbindung und eine Datenverbindung zwischen der Ventilbatterie 11b und der Sensorvorrichtung 35b sowie dem Aktor 18b hergestellt ist.

Die Sensorvorrichtung 35b überträgt die Geräte-Identifikationsdaten 61b drahtgebunden, z.B. über die Datenleitungen 89, an eine Empfangseinrichtung 63, die beispielsweise im den Aktor 18b steuernden Ventilmodul 16 enthalten ist.

Zur Speicherung und Übertragung der Geräte-Identifikationsdaten 61a - 61d, 62 sind verschiedene Übertragungskonzepte und Speicherkonzepte möglich. Bei dem Automatisierungssystem 10 übertragen vorzugsweise Sensorvorrichtungen die Geräte-Identifikationsdaten 61a, 61b, 61c, 61d und 62 an die Empfangseinrichtungen 63.

Die Ventileinrichtung 23 enthält die Drucksensoren 31 und bildet insofern eine Sensorvorrichtung. Ihr Busankoppler 34 bildet insoweit eine Sensor-Kommunikationseinrichtung und der Speicher 64 mit den Geräte-Identifikationsdaten 62 und/oder 61d einen Sensor-Speicher.

Die Geräte-Identifikationsdaten 61c werden nicht vom Aktor 18c selbst, sondern von der ihm zugeordneten Sensorvorrichtung 35c gesendet. Die Sensorvorrichtung 35c ist am Gehäuse des Aktors 18c angeordnet, beispielsweise in Längsrichtung seitlich, und enthält einen Positionssensor 65, der Positionswerte 36 eines Aktorglieds 67c des Aktors 18c über eine Sensor-Kommunikationsschnittstelle 68c versendet. Die Sensor-Kommunikationsschnittstelle 68c enthält eine Busschnittstelle 81, beispielsweise einen Busankoppler, für eine Bus-Verbindung über die Ventileinrichtung 23 hinweg zu der Regler-Kommunikationsschnittstelle 27.

Die Geräte-Identifikationsdaten 61c, die den Aktor 18c kennzeichnen und beispielsweise den Durchmesser des Aktorglieds 67c, den Verfahrweg des Aktorglieds 67c in einem Gehäuse 69c des Aktors 18c oder dergleichen, umfassen, sind in einem Sensor-Speicher 70c gespeichert. Der Speicher 70c ist zweckmäßigerweise programmierbar, beispielsweise über eine Programmierschnittstelle 71, an die das Bediengerät 57 anschließbar ist. Die Sensor-Kommunikationsschnittstelle 68c enthält als eine Leseeinrichtung 76c zum Auslesen des Sensor-Speichers 70c beispielsweise elektrische Lesekontakte.

Bei dem Aktor 18c ist keine eigene Intelligenz zur Speicherung der Geräte-Identifikationsdaten 61c erforderlich.

Die Sensorvorrichtung 35c kann beispielsweise über ihre Sensor-Kommunikationsschnittstelle 68c, das heißt einen Busankoppler mit elektrischer Versorgungsspannung versorgt werden.

Die Sensorvorrichtung 35a hingegen, die ebenfalls einen Positionssensor 65 enthält, hat einen elektrischen Langzeitenergiespeicher 72, beispielsweise eine Lithiumbatterie, für einen langzeitig von einer externen Stromversorgung unabhängigen Betrieb. Auch zur Datenübertragung, beispielsweise zum Senden von durch einen Positionssensor 65 erzeugten Positionswerten 36, sind keine Leitungsverbindungen erforderlich. Die Sensorvorrichtung 35a hat eine drahtlos arbeitende Kommunikationseinrichtung 68a, die beispielsweise dem Wifi-Standard arbeitet (Wireless Fidelidy)

In einem Sensorspeicher 70a der Sensorvorrichtung 35a sind Sensor-Identifikationsdaten 73 gespeichert, beispielsweise die Auflösung des Positionssensors 65, eine Anfangsposition und eine Endposition des Messbereichs des Positionssensors 65. Geräte-Identifikationsdaten 61a des fluidtechnischen Geräts 17, beispielsweise Durchmesser des Aktorglieds 67a, maximal an einem Kraftabgriff des Aktos 67a, beispielsweise dessen Kolbenstange, bereitstehende Kraft oder dergleichen, sind lokal in einem Geräte-Speicher 74 des fluidtechnischen Geräts gespeichert. Der Geräte-Speicher 74 ist z.B. in einem Gehäusedeckel 75a des Gehäuses 69a angeordnet und enthält vorteilhaft einen wiederbeschreibbaren Speicher, z.B. ein EEPROM. Der Geräte-Speicher 74 wird bei der Produktion des fluidtechnischen Geräts 17 programmiert, so dass dessen Geräte-Identifikationsdaten 61a am Einsatzort des Aktors 18a zur Verfügung stehen und beispielsweise durch ein Lesegerät ausgelesen werden, beispielsweise von dem Bediengerät 59.

Vorteilhaft wird eine Sensor-Kommunikationsschnittstelle zur Übertragung der beim fluidtechnischen Gerät, beispielsweise dem Aktor 18a, gespeicherten Geräte-Identifikationsdaten genutzt. Eine Leseeinrichtung 76a, beispielsweise eine Datenschnittstelle mit elektrischen Kontakten der Sensor-Kommunikationseinrichtung 68a, liest über elektrische Verbindungen 77 den Geräte-Speicher 74 aus.

Die elektrischen Verbindungen 77 werden bei der Anordnung oder Montage der als Sensormodul 78 ausgestalteten Sensorvorrichtung 35a automatisch geschlossen. Ein Gehäuse 79 der Sensorvorrichtung 35a erstreckt sich bis zum Gehäusedeckel 75a, so dass Kontakte 80 am Gehäusedeckel 75a, sodass sich Kontakte 80 der Sensorvorrichtung 35a und des Aktors 18a berühren und die elektrischen Verbindungen 77 herstellen.

Alternativ ist ein drahtloses Konzept möglich, bei dem die Geräte-Identifikationsdaten 61a beispielsweise in einem drahtlos auslesbaren Geräte-Speicher 75' gespeichert sind, beispielsweise in einem RFID-Modul (RFID = Radio Frequency Identification). Die Leseeinrichtung 76 ist in diesem Fall eine drahtlose Lese-Schnittstelle, beispielsweise ein RFID-Lesegerät. Eine Sendeeinrichtung des Geräte-Speichers 74' erhält die zum Senden der Geräte-Identifikationsdaten 61a erforderliche Sendeenergie durch die Sensorvorrichtung 35a, beispielsweise durch eine nicht dargestellte elektrische Verbindung oder durch das Senden einer Abfragenachricht seitens der Leseeinrichtung 76 übertragene Sendeenergie.

Die aus den Geräte-Speichern 74 oder 74' ausgelesenen Geräte-Identifikationsdaten 61a können auch erste Geräte-Identifikationsdaten sein, anhand derer die Sensorvorrichtung 35a zweite Geräte-Identifikationsdaten 61a' in ihrem Sensorspeicher 60a ermittelt. Die Identifikationsdaten 61a' sind beispielsweise Daten, die die Identifikationsdaten 61a ergänzen. So können beispielsweise die Geräte-Identifikationsdaten 61a eine Typkennung des Aktors 18a enthalten, anhand deren die Sensorvorrichtung 35a weitere Kenndaten es Aktors 18a ermittelt, beispielsweise dessen mechanisch Eigenschaften. Weiterhin ist es bei jeder erfindungsgemäßen Sensorvorrichtung, so beispielsweise bei der Sensorvorrichtung 35a, möglich, dass die Sensorvorrichtung anhand der Geräte-Identifikationsdaten Sensorwerte konvertiert oder ergänzt. So kann beispielsweise die Sensorvorrichtung 35a die Positionswerte 36 mit Angaben in metrischen Einheiten versehen, wenn sie anhand der Geräte-Identifikationsdaten 61a den konkreten Verfahrweg des Aktorglieds 67a ermittelt hat. Die Sensorvorrichtung 35b kann anhand der Druck-Sensorwerte 85 beispielsweise eine Kraftabgabe des Aktors 82b konkret ermitteln und als Kraftwerte, beispielsweise in Newton, ausgeben.

Während die Sensorvorrichtungen 35a, 35c lösbar an den Aktoren 18a, 18c anordenbare Sensormodule 78 bilden und so bei Bedarf gegen andersartige, vorzugsweise erfindungsgemäße Sensorvorrichtungen austauschbar sind, die beispielsweise Drucksensoren oder dergleichen enthalten, ist eine Sensorvorrichtung 35b ein integraler Bestandteil des Aktors 18b.

Die Sensorvorrichtung 35b hat einen Positionssensor 65 sowie Drucksensoren 84, die beispielsweise an Druckluft-Anschlüssen 83a, 83b angeordnet sind. Eine Sensor-Kommunikationseinrichtung 68b sendet Positionswerte 36 sowie Druck-Sensorwerte 85 der Drucksensoren 84 drahtgebunden. Prinzipiell könnten dafür separate Datenleitungen vorgesehen sein. Die Sensor-Kommunikationseinrichtung 68b ist jedoch mit den Datenleitungen 89 der Fluid-Verbindungsleitung 87 verbunden.

Über die Datenleitungen 89 überträgt die Sensorvorrichtung 35b die Positions-Sensorwerte 36 und die Druck-Sensorwerte 85 sowie beispielsweise beim Anmelden an die Ventilbatterie 11b oder auf Abfrage von der Ventilbatterie 11b die den Aktor 18b kennzeichnenden Geräte-Identifikationsdaten 61b. Die Geräte-Identifikationsdaten 61b sind in einem Sensor-Speicher 70b der Sensorvorrichtung 35b gespeichert.

Die Sensorvorrichtung 35b hat ferner einen Prozessor 91, der beispielsweise Arbeitszyklen des Aktors 18b zählt und/oder der anhand der Druck-Sensorwerte 85 Störungen erkennt oder dergleichen. Der Prozessor bildet einen Bestandteil von Diagnosemitteln 93 und versendet diese Informationen als Diagnosedaten 92 über die Sensor-Kommunikationseinrichtung 68b.

## Patentansprüche

1. Ventilbatterie mit mehreren in einer Reihenrichtung nebeneinander angeordneten Ventilmodulen (16) zur fluidtechnischen Ansteuerung fluidtechnischer Geräte (17), und mit mindestens einem mit der Ventilbatterie (11a, 11b) verbundenen, durch die Ventilbatterie gesteuerten fluidtechnischen Gerät (17), das eine von der Ventilbatterie (11a, 11b) separate Baueinheit bildet, **dadurch gekennzeichnet, dass** die Ventilbatterie eine dem fluidtechnischen Gerät (17) zugeordnete Empfangseinrichtung (63) aufweist, die zum Empfangen von das mindestens eine fluidtechnische Gerät (17) kennzeichnenden Geräte-Identifikationsdaten (61a-61d; 62) ausgestaltet ist, die eine dem fluidtechnischen Gerät (17) zugeordnete Identdaten-Sendeeinrichtung (60) sendet, und dass die Empfangseinrichtung (63) zum Weiterleiten der Geräte-Identifikationsdaten (61a-61d; 62) mit einer Steuerungseinrichtung (12, 22, 94) zur Steuerung des fluidtechnischen Geräts (17) verbunden ist oder verbindbar ist.

2. Ventilbatterie nach Anspruch 1, **dadurch gekennzeichnet, dass** die Geräte-Identifikationsdaten (61a-61d; 62) eine Typkennung und/oder mindestens eine physikalische Eigenschaft des fluidtechnischen Geräts (17) enthalten.

3. Ventilbatterie nach Anspruch 1 oder 2, **dadurch gekennzeichnet, dass** die Steuerungseinrichtung (12, 22, 94) einen Bestandteil der Ventilbatterie (11a, 11b) bildet.

4. Ventilbatterie nach Anspruch 3, **dadurch gekennzeichnet, dass** die Steuerungseinrichtung (12, 22, 94) ein an die Ventilmodule (16) anreihbares Steuermodul oder Reglermodul (25a, 25b) ist.

5. Ventilbatterie nach Anspruch 3 oder 4, **dadurch gekennzeichnet, dass** die Empfangseinrichtung (63) einen Bestandteil der Steuerungseinrichtung (12, 22, 94) bildet.

6. Ventilbatterie nach einem der vorhergehenden Ansprüche, **dadurch gekennzeichnet, dass** die Empfangseinrichtung (63) einen Bestandteil einer Regler-Kommunikationsschnittstelle (27) zur Regelung des mindestens einen fluidtechnischen Geräts (17) bildet.

7. Ventilbatterie nach einem der vorhergehenden Ansprüche, **dadurch gekennzeichnet, dass** die Empfangseinrichtung (63) einen Bestandteil eines Eingabe-/Ausgabemoduls (40) oder einer Ventilbatterie-Kommunikationseinrichtung (14a, 14b) der Ventilbatterie (11a, 11b) bildet.

8. Ventilbatterie nach einem der vorhergehenden Ansprüche, **dadurch gekennzeichnet, dass** die Steuerungseinrichtung (12, 22, 94) das mindestens eine fluidtechnische Gerät (17) anhand der Geräte-Identifikationsdaten (61a-61d; 62) steuert und/oder regelt.

9. Ventilbatterie nach einem der vorhergehenden Ansprüche, **dadurch gekennzeichnet, dass** die Empfangseinrichtung (63) mit einer Ventilbatterie-Kommunikationseinrichtung (14a, 14b) zu einer externen Kommunikation der Ventilbatterie (11a, 11b) verbunden ist.

10. Ventilbatterie nach einem der vorhergehenden Ansprüche, **dadurch gekennzeichnet, dass** sie einen internen Kommunikationsbus (21) zur internen Kommunikation zwischen den Modulen der Ventilbatterie (11a, 11b) aufweist.

11. Ventilbatterie nach einem der vorhergehenden Ansprüche, **dadurch gekennzeichnet, dass** die Empfangseinrichtung (63) zu einem drahtlosen Empfang der Geräte-Identifikationsdaten (61a-61d; 62) ausgestaltet ist.

12. Ventilbatterie nach einem der vorhergehenden Ansprüche, **dadurch gekennzeichnet, dass** die Empfangseinrichtung (63) für eine verkettete Anschlussanordnung ausgestaltet ist, bei der eine erste Identdaten-Sendeeinrichtung (60) eines ersten fluidtechnischen Geräts (23) und mindestens eine zweite Identdaten-Sendeeinrichtung (60) eines zweiten fluidtechnischen Geräts (35c) zur Übermittlung von das jeweilige fluidtechnische Gerät (23, 35c) kennzeichnenden Geräte-Identifikationsdaten (61a-61d; 62) seriell mit der Empfangseinrichtung (63) verbunden sind.

13. Ventilbatterie nach einem der vorhergehenden Ansprüche, **dadurch gekennzeichnet, dass** die Empfangseinrichtung (63) eine Bus-Schnittstelle umfasst.

14. Ventilbatterie nach einem der vorhergehenden Ansprüche, **dadurch gekennzeichnet, dass** die Identdaten-Sendeeinrichtung (60) einen Bestandteil des fluidtechnischen Geräts (17) bildet oder eine von dem fluidtechnischen Gerät (17) separate Baueinheit ist.

15. Ventilbatterie nach einem der vorhergehenden Ansprüche, **dadurch gekennzeichnet, dass** das mindestens eine fluidtechnische Gerät (17) eine von der Ventilbatterie (11a, 11b) entfernte Ventileinrichtung (23) zur fluidtechnischen Ansteuerung eines fluidtechnischen Aktors (18a-18d) umfasst.

16. Ventilbatterie nach einem der vorhergehenden Ansprüche, **dadurch gekennzeichnet, dass** der fluidtechnische Aktor (18a-18d) oder eine dem Aktor (18a-18d) zugeordnete Sensorvorrichtung (35a-35d) oder ein Identmodul zum Senden von den Aktor (18a-18d) kennzeichnenden Aktor-Identifikationsdaten mit der Empfangseinrichtung (63) seriell über die Ventileinrichtung (23) verbunden ist.

17. Ventilbatterie nach einem der vorhergehenden Ansprüche, **dadurch gekennzeichnet, dass** die Empfangseinrichtung (63) mit einem Anschluss für eine Fluid-Verbindungsleitung (87) verbunden ist, über die die Identdaten-Sendeeinrichtung (60) mit der Ventilbatterie (11a, 11b) verbindbar ist, wobei die Fluid-Verbindungsleitung (87) mindestens eine Datenleitung (89) enthält, über die die Identdaten-Sendeeinrichtung (60) die Geräte-Identifikationsdaten (61a-61d; 62) übermittelt.

## Claims

1. Valve bank with a plurality of valve modules (16) arranged side by side in a row for the fluid-powered selection of fluid power devices (17) and with at least one fluid power device (17) connected to the valve bank (11a, 11b) and controlled by the valve bank but being a unit separate from the valve bank (11a, 11b), **characterised in that** the valve bank is provided with a receiving device (63) assigned to the fluid power device (17), which is designed for the reception of device identification data (61a-61d; 62) identifying the at least one fluid power device (17), which are transmitted by an identification data transmitting device (60) assigned to the fluid power device (17), and **in that** the receiving device (63) is connected or connectable to a control unit (12, 22, 94) for the control of the fluid power device (17) in order to forward the device identification data (61a-61d; 62).

2. Valve bank according to claim 1, **characterised in that** the device identification data (61a-61d; 62) include a type designation and/or at least one physical property of the fluid power device (17).

3. Valve bank according to claim 1 or 2, **characterised in that** the control unit (12, 22, 94) is a component of the valve bank (11a, 11b).

4. Valve bank according to claim 3, **characterised in that** the control unit (12, 22, 94) is an open or closed loop control module (25a, 25b) which can be mounted side by side with the valve modules (16).

5. Valve bank according to claim 3 or 4, **characterised in that** the receiving device (63) is a component of the control unit (12, 22, 94).

6. Valve bank according to any of the preceding claims, **characterised in that** the receiving device (63) is a component of a controller communication interface (27) for the closed loop control of the at least one fluid power device (17).

7. Valve bank according to any of the preceding claims, **characterised in that** the receiving device (63) is a component of an input/output module (40) or of a valve bank communication device (14a, 14b) of the valve bank (11a, 11b).

8. Valve bank according to any of the preceding claims, **characterised in that** the control unit (12, 22, 94) controls the at least one fluid power device (17) in an open and/or closed loop using the device identification data (61a-61d; 62).

9. Valve bank according to any of the preceding claims, **characterised in that** the receiving device (63) is connected to a valve bank communication device (14a, 14b) for an external communication of the valve bank (11a, 11b).

10. Valve bank according to any of the preceding claims, **characterised in that** it includes an internal communication bus (21) for the internal communication between the modules of the valve bank (11a, 11b).

11. Valve bank according to any of the preceding claims, **characterised in that** the receiving device (63) is designed for a wireless reception of the device identification data (61a-61b; 62).

12. Valve bank according to any of the preceding claims, **characterised in that** the receiving device (63) is designed for an interconnection arrangement wherein a first identification data transmitting device (60) of a first fluid power device (23) and at least one second identification data transmitting device (60) of a second fluid power device (35c) are connected in series with the receiving device (63) for the transmission of device identification data (61a-61b; 62) identifying the respective fluid power device (23, 35c).

13. Valve bank according to any of the preceding claims, **characterised in that** the receiving device (63) includes a bus interface.

14. Valve bank according to any of the preceding claims, **characterised in that** the identification data transmitting device (60) is a component of the fluid power device (17) or a unit separate from the fluid power device (17).

15. Valve bank according to any of the preceding claims, **characterised in that** the at least one fluid power device (17) includes a valve device (23) separate from the valve bank (11a, 11b) for the fluid-powered selection of a fluid power actuator (18a-18d).

16. Valve bank according to any of the preceding claims, **characterised in that** the fluid power actuator (18a-18d) or a sensor unit (35a-35d) assigned to the actuator (18a-18d) or an identification module for transmitting actuator identification data identifying the actuator (18a-18d) is connected in series with the receiving device (63) via the valve device (23).

17. Valve bank according to any of the preceding claims, **characterised in that** the receiving device (63) is connected to a port for a fluid connecting line (87) via which the identification data transmitting device (60) can be connected to the valve bank (11a, 11b), the fluid connecting line (87) including at least one data line via which the identification data transmitting device (60) transmits the device identification data (61a-61d; 62).

## Revendications

1. Batterie de vannes, comportant plusieurs modules de vanne (16) juxtaposés dans un alignement en rangée et destinés au pilotage fluidique de composants fluidiques (17), et comportant au moins un composant fluidique (17), qui est relié à la batterie de vannes (11a, 11b) et est commandé par la batterie de vannes et qui forme une unité séparée de la batterie de vannes (11a, 11b), **caractérisée en ce que** la batterie de vannes comporte un dispositif de réception (63), associé au composant fluidique (17) et configuré pour recevoir des données d'identification (61a-61d ; 62), qui caractérisent ledit au moins un composant fluidique (17) et qui sont émises par un dispositif d'émission des données d'identification (60) associé au composant fluidique (17), et **en ce que** le dispositif de réception (63), en vue de transmettre les données d'identification (61a-61d ; 62), est relié ou peut être relié à un dispositif de commande (12, 22, 94) pour commander le composant fluidique (17).

2. Batterie de vannes selon la revendication 1, **caractérisée en ce que** les données d'identification (61a-61d ; 62) contiennent une identification du type et/ou d'au moins une propriété physique du composant fluidique (17).

3. Batterie de vannes selon la revendication 1 ou 2, **caractérisée en ce que** le dispositif de commande (12, 22, 94) forme une partie intégrante de la batterie de vannes (11a, 11b).

4. Batterie de vannes selon la revendication 3, **caractérisée en ce que** le dispositif de commande (12, 22, 94) est un module de commande ou module de réglage (25a, 25b) apte à être juxtaposé à la rangée de modules de vanne (16).

5. Batterie de vannes selon la revendication 3 ou 4, **caractérisée en ce que** le dispositif de réception (63) forme une partie intégrante du dispositif de commande (12, 22, 94).

6. Batterie de vannes selon l'une des revendications précédentes, **caractérisée en ce que** le dispositif de réception (63) forme une partie intégrante d'une interface de communication et réglage (27) pour le réglage dudit au moins un composant fluidique (17).

7. Batterie de vannes selon l'une des revendications précédentes, **caractérisée en ce que** le dispositif de réception (63) forme une partie intégrante d'un module d'entrée entrée/sortie (40) ou d'un dispositif de communication (14a, 14b) de la batterie de vannes (11a, 11b).

8. Batterie de vannes selon l'une des revendications précédentes, **caractérisée en ce que** le dispositif de commande (12, 22, 94) commande et/ou règle ledit au moins un composant fluidique (17) à l'appui des données d'identification (61a-61d ; 62).

9. Batterie de vannes selon l'une des revendications précédentes, **caractérisée en ce que** le dispositif de réception (63) est relié à un dispositif de communication (14a, 14b) de la batterie de vannes pour une communication externe de la batterie de vannes (11a, 11b).

10. Batterie de vannes selon l'une des revendications précédentes, **caractérisée en ce qu'**elle comporte un bus de communication (21) interne pour la communication interne entre les modules de la batterie de vannes (11a, 11b).

11. Batterie de vannes selon l'une des revendications précédentes, **caractérisée en ce que** le dispositif de réception (63) est configuré pour la réception sans fil des données d'identification (61a-61d ; 62) des composants.

12. Batterie de vannes selon l'une des revendications précédentes, **caractérisée en ce que** le dispositif de réception (63) est configuré pour un système de connexion en chaîne, dans lequel un premier dispositif d'émission de données d'identification (60) d'un premier composant fluidique (23) et au moins un deuxième dispositif d'émission de données d'identification (60) d'un deuxième composant fluidique (35c) sont reliés en série avec le dispositif de réception (63) en vue de la transmission des données d'identification (61a-61d ; 62) caractérisant le composant fluidique (23, 35c) concerné.

13. Batterie de vannes selon l'une des revendications précédentes, **caractérisée en ce que** le dispositif de réception (63) comporte une interface de bus.

14. Batterie de vannes selon l'une des revendications précédentes, **caractérisée en ce que** le dispositif d'émission de données d'identification (60) forme une partie intégrante du composant fluidique (17) ou est une unité séparée du composant fluidique (17).

15. Batterie de vannes selon l'une des revendications précédentes, **caractérisée en ce que** ledit au moins un composant fluidique (17) comporte un système de vannes (23), éloigné de la batterie de vannes (11a, 11b) et destiné à l'actionnement fluidique d'un actionneur fluidique (18a-18d).

16. Batterie de vannes selon l'une des revendications précédentes, **caractérisée en ce que** l'actionneur fluidique (18a-18d) ou un dispositif de détection (35a-35d), associé à l'actionneur (18a-18d), ou un module d'identification sont reliés en série avec le dispositif de réception (63) via le système de vannes (23) en vue d'émettre des données d'identification d'actionneur caractérisant l'actionneur (18a-18d).

17. Batterie de vannes selon l'une des revendications précédentes, **caractérisée en ce que** le dispositif de réception (63) est relié à un raccord pour une ligne de liaison pour fluide (87), par l'intermédiaire de laquelle le dispositif d'émission de données d'identification (60) peut être relié à la batterie de vannes (11a, 11b), ladite ligne de liaison pour fluide (87) contenant au moins une ligne de transmission de données (89), via laquelle le dispositif d'émission de données d'identification (60) transmet les données d'identification (61a-61d ; 62) des composants.
